# EUROPEAN PATENT SPECIFICATION

(11) **EP 2 335 048 B1**
(45) Date of publication and mention of the grant of the patent: **23.12.2015**
(21) Application number: 09748821.7
(22) Date of filing: 01.10.2009
(51) Int. Cl.: G01N 21/15, G01N 21/64, G01N 21/94, G01N 1/28, G01N 35/00

(54) **METHOD AND APPARATUS FOR DETECTING UNDESIRED MEASUREMENT CONDITIONS**
VERFAHREN UND VORRICHTUNG ZUR ERKENNUNG UNERWÜNSCHTER MESSUNGSBEDINGUNGEN
PROCÉDÉ ET APPAREIL POUR DÉTECTER DES CONDITIONS DE MESURE NON SOUHAITÉES

(30) Priority: 03.10.2008 FI 20085935; 03.10.2008 US 102691 P
(43) Date of publication of application: 22.06.2011
(73) Proprietor: Wallac OY, 20750 Turku (FI)
(72) Inventor: VÄISÄNEN, Ville, FI-20810 Turku (FI); KARVINEN, Jarkko, FI-20520 Turku (FI); HURSKAINEN, Pertti, FI-20760 Piispanristi (FI); TUOMOLA, Elina, FI-20660 Littoinen (FI)
(74) Representative: Seppo Laine Oy
(86) International application number: PCT/FI2009/050787
(87) International publication number: WO 2010/037907

(56) References cited:
- GB-A- 1 522 965
- US-A- 4 058 732
- US-A- 5 204 267
- US-A- 5 719 035
- US-A1- 2005 176 027
- US-A1- 2006 014 185

## Description

### Field of the Invention

The invention relates to a method and apparatus for handling samples of body fluids, such as blood. In particular, the invention relates to assays and to instruments where the samples are small disks punched out of dried blood spots on carrier material like filter paper or other fibrous substrate and transferred into sample containers, such as wells of a microtiter plate.

### Related Art

Sample analyses are frequently carried out using microtiter plates, the wells of which contain a piece of sample-containing substrate. Examples of substrates include fibrous cards and especially paper cards. An example of such analysis is screening of newborn babies or neonates using blood as a sample. Such analysis comprises collecting blood samples from neonates by impregnating blood to certain areas of fibrous cards so as to form sample spots on the cards. The samples are dried onto the cards. The cards are thereafter fed to a manual or an automatic card handling apparatus, which punches one small-diameter disk from each sample for each analysis. The punched disks are placed to the wells of a microtiter plate so that one well contains one disk. After subjecting the wells containing disks to necessary chemical or biochemical assay steps, such as addition of reagents and incubation at the chosen temperature for the chosen time, the amount or activity of the analyte can be determined optically, for example, using prompt fluorescence, time-resolved fluorescence, absorbance, luminescence measurements or alternatively by mass spectrometry.

It is crucial to the reliability of the measurement that the optical measurement step is reliable. Reliable measurement step is easily achieved in heterogeneous assays including disk removal and washing step(s). By contrast, there is no wash step in homogeneous assays and blood disks, eluted blood and incubation buffer are in the wells throughout the assays, also during measurement. Additionally, blood disks have a tendency to float on the surface of incubation buffer. It has been found that even after incubation of several hours, a low percentage of the disks are still floating (c.f. US 5,204,267). Although a sufficient elution takes place even if a disk floats, the floating disk can severely interfere with the optical detection, because light can not enter or exit the liquid freely. The same applies for other bodies, such as dust particles and hair in the sample container. Furthermore, blood spot cards, usually filter paper, give fluorescence signal. In some fluorescence measurements floating disks contribute to the signal obtained in assays and thus affect the determination of analytes. For example, in fluorescence measurement of GALT (galactose-1-phosphate uridyl transferase) assay, the maximum emission wavelength of the generated reaction product, NADPH, is 460 nm. However, upon excitation at 330-370 nm the sample disk has an intrinsic fluorescence emission at 460 nm and emission peak at 455 nm. Thus, if the disk is floating in the light path during measurement, a higher signal is obtained than in the case when the disk is not floating. A higher signal indicates a higher concentration of formed NADPH, which in turn indicates a higher GALT activity. Signals in GALT assays given by floating disks are roughly the same as signals obtained with samples of normal GALT activity. Consequently there is a risk that a sample with no or very low GALT activity may be interpreted as normal due to the fact that measurement of NADPH fluorescence has given a result in the normal range due to a floating disk.

Whether there are floating disks in the wells or not is conventionally checked before the measurement by visual inspection by the operator of the measurement device. As each plate typically contains 96 wells or even more, this inspection is time-consuming. Moreover, such inspection is prone to human errors, as the disks are not always clearly visible as they may, for example, reside vertically against the walls of the wells, or partly below the surface level of the measurement liquid. In addition, in an automatic measurement device, the plates are typically hidden within the device during the entire assay protocol, including dispensing of liquid to the wells, whereby visual inspection right before the optical measurement is impossible. In screening applications the number of samples is large and therefore not only high-throughput testing of the samples is required, but also the large number of samples need to be measured with high accuracy and reliability in order to avoid false, in particular false negative, screening results.

Transmittance measurements have also be used for detecting air pockets and debris within the measurement wells. Such method is disclosed in US 6,853,666. However, transmittance measurements are not possible in all cases, e.g. if the liquid in the wells is opaque. In addition, a transmittance measurement is not able to distinguish between floating and non-floating sample substrates. Transmittance/absorbance measurement is utilized also in US 5,204,267. An abnormality detection method based on measurement of fluorescence from DNA microarrays is described in US 2005/0227274 and from photosynthetic samples is disclosed in US 2007/0224659. However, neither these methods are suitable or suggested to be used for detecting floating blood sample disks.

US 5719035 discloses an assay for enzyme activity from a red blood sample using a direct microfluorometric assay. The assay comprises precipitating proteins on a sample substrate prior to measurement to decrease substrate reflectivity. US 5204267 additionally teaches that floating sample discs may be pushed down into the buffer with suitable means before measurement, GB 1522965 discloses that a substrate paper for can cause background fluorescence signal. US 2005/176027 and US 4058732 disclose yet another fluorescent measurement methods and apparatuses.

### Summary of the Invention

It is an aim of the invention to provide a reliable automatic method for the detection of floating blood sample disks or the like undesired measurement conditions prevailing in a sample container, such as a well in a microtiter plate. It is a particular aim of the invention to provide a detection method suitable for automated screening of a plurality of samples for avoiding false screening results.

It is also an aim to provide a more reliable measurement apparatus removing the need for visual inspection and thus to avoid problems associated with visual inspection of the wells of sample plates before the measurement.

The aims are achieved by the method and apparatus as defined in the independent claims.

The invention is based on the finding that temporal behaviour or/and spectral characteristics of fluorescent light emitted from a sample well can be used for determining whether a disk is floating in the well or not. In particular, it has been found that although prompt fluorescence characteristics of the incubation buffer (containing blood eluted from the disk) and the sample disk may be very similar, the time-resolved fluorescence properties of the disk and the buffer containing eluted blood are usually different. On the other hand, if the incubation buffer contains a component having certain characteristic time-resolved fluorescence properties, prompt fluorescence properties of the disk are usually different from those of the buffer. Exemplary methods are:
1. Measurement of the well using a time-resolved fluorescence in order to detect a unique time-resolved fluorescence property of a floating sample disk.
2. Measurement of the well using prompt fluorescence in order to detect a unique prompt fluorescence property of a floating sample disk.

As defined herein, "incubation buffer" is a solution typically comprising analyte specific reagents such as substrates, cofactors, label molecules, antibodies, enzymes, and buffer components.

As defined herein, "unique property" is a temporal or a spectral property which is characteristic of the sample disk but not of the incubation buffer contained in the well. Alternatively, the analysis can be based on the detection of absence of a property which is characteristic of the incubation buffer containing eluted blood but not of the sample disk. "Unique property" means also combinations of fluorescence mode (prompt vs time-resolved) and excitation and emission bands.

In addition to the detection of a floating disk in a well, the method can be used, for example, for
- detecting foreign bodies such as dust and hair in the well,
- detecting the presence of a disk in a well after an automated disk-transfer from one measurement plate to another.

The measurement indicative of floating disks should be carried out before or after the actual measurement of the analyte. A typical homogeneous assay to measure enzyme activity in a blood disk (e.g. GALT assay) comprises
- addition of a sample disk and incubation buffer into a well of a microtiter plate,
- incubation (typically for at least 1 hour),
- optionally, addition of incubation buffer and second incubation (typically for at least 1 hour),
- detection of potentially floating disks by time-resolved fluorescence (excitation, for example, at 340 nm and detection of time-resolved emission, for example, at 615 nm),
- determining whether the amount of time-resolved signal is indicative of a floating disk,
- measurement of the analyte by prompt fluorescence (excitation, for example, at 340 nm and detection of emission, for example, at 460 nm).

It is notable that the invention generally takes advantage of a signal-suppressing property of the incubation buffer containing eluted blood sample. The measurements are performed such that both the excitation source and detector are located above the sample. The incubation buffer containing eluted blood significantly prevents a signal from a disk on the bottom of a well to be measured. Suppression of the excitation or emission light, or both, may take place. This approach has proven to be effective and reliable, in particular for samples from which significant amounts of light-suppressive components are eluted to the incubation buffer. In particular, it is known that haemoglobin which elutes from blood samples absorbs efficiently ultraviolet and visible light at 250-550 nm, and particularly at 300 - 450 nm. Consequently, also the signal in the measurement of the analyte results from the uppermost layer of the incubation buffer containing blood and/or other absorbing components. Thus, it is preferable that the excitation and/or emission wavelengths used in the detection of floating disks lies in the abovementioned wavelength range. Instead of haemoglobin, the same principle can be applied to other substances present in the incubation buffer itself or eluted from a sample disk and having absorption in the ultraviolet and/or the visible range of light.

The method is typically applied in combination with automated measurement of a concentration or an activity of a component contained in a sample substrate, such as a fibrous blood sample disk (also called a dried blood spot). In such analyses, the component of interest is eluted from the sample-containing substrate to an incubation buffer in a sample container, such as a well of a microtiter plate. The analysis of the component of interest is performed using known chemical or biochemical analysis techniques, for example, by measuring the amount of the component eluted to the incubation buffer using a direct optical measurement (e.g. a fluorescent component) or by measuring an activity of the component (e.g. an enzymatic activity). The component of interest can be an enzyme. For example, in the GALT assay, NADP is converted to fluorescent NADPH in the presence of certain enzymes, NADP/NADPH acting as a necessary cofactor and also as a label molecule indicative of the enzyme content of the sample.

According to one preferred embodiment, the sample-containing substrate is a fibrous substrate, such as a disk punched from a sample card commonly used in collecting samples for neonatal screening. The problem of floating is emphasized in the case of fibrous disks as they are porous and thus remain easily on the surface of the measurement liquid. In addition to the substrate material itself, the tendency of a particular disk to float may depend also on the individual blood sample contained therein and on any possible preparation steps of the disk before or after punching.

According to one preferred embodiment the optical measurement method used in the detection of floating disks is time-resolved fluorescence. In particular, detection at an emission region characterized by optical filters typically used in the detection of time-resolved fluorescence emission from lanthanide chelates for example at 545-642 nm, which has proven to give a response signal characteristic to fibrous sample disks. Since the time-resolved or phosphorescence emission from fibrous substrates has a broad emission spectrum, any filter at the emission region 400-1000 nm could be used in the measurement.

According to an alternative preferred embodiment, the optical measurement method for the detection of floating disks is prompt fluorescence.

In screening applications it is typically necessary to analyse a large number of samples. Therefore, the detection of floating disks may be carried out for a plurality of wells of a microtiter plate or the like sample container in successive or parallel manner, depending on the instrumentation used. This greatly reduces the risk of human errors which are particularly likely when a large number of wells are analysed.

The invention can be used in connection with screening of samples in laboratory instrumentation utilizing optical detection, for example, according to the GALT or G-6-PD measurement protocol.

The present invention comprises an apparatus , as defined in claim 12, comprising
- a fluorescence measurement unit for measuring the fluorescent response of contents of the sample container, and
- a computing unit adapted to determine, based on the fluorescent response, whether the fluorescent response is characteristic to a sample container comprising a sample substrate and incubation buffer under undesired measurement conditions, such as a floating sample substrate or foreign bodies in the sample container, or to a sample container suitable for optical measurement of analyte contained in the sample.

Exemplary sample containers are tubes, wells in a microtiter plate, sample cups and cartridges.

According to one preferred embodiment, the optical measurement unit is capable of prompt fluorescence and/or time-resolved fluorescence measurements. The computing unit may be adapted to calculate the optical property and to decide whether there is a disk floating in the well, as discussed above. The decision can be made, for example, by comparing the property to a predefined threshold value for that property.

Fluorescence-based measurements are robust and due to the ability to utilize spectral and temporal information, they are well adjustable for the present method irrespective of the type of the substrate/sample/analyte/buffer used.

An automated plate-handling and measurement apparatus preferably comprises one or more, even all of the following units:
- a storage unit for storing a plurality of microtiter plates,
- dispensing unit(s) for dispensing incubation buffer to a plurality of wells in a microtiter plate,
- an incubating unit,
- measurement unit(s) providing the capability of optically measuring the wells (typically the same unit is used for the detection of floating disks and for the actual analysis of the analyte), and
- a manipulator for automatically transporting the microtiter plate between the units.

The term "elution" is used to describe any process capable of releasing at least one component, i.e. the "analyte" from a substrate containing an impregnated sample, such as a dried blood spot. The "analyte" (or "component of interest") can thereafter be measured by any optical measurement method suitable for its measurement, preferably by a fluorescence measurement.

Preferred embodiments and advantages of the invention are described in more detail in the following with reference to the attached drawings.

### Brief Description of the Drawings

Figs. 1A, 1B and 1C show schematic cross-sectional pictures of wells in a microtiter plate having a submerged, a partially submerged and a floating sample disk, respectively.
Fig. 2A depicts a well matrix of a microtiter plate, some of the wells denoted as containing a floating disk,
Fig. 2B shows a three-dimensional graph of TRF measurement results obtained from a microtiter plate of Fig. 2A,
Fig. 3 shows a graph of TRF counts for the detection of floating disks.

### Detailed Description of Embodiments

Some preferred embodiments of the invention are described below using a fibrous blood disks as exemplary sample-containing substrates and microtiter plates as an exemplary sample containers. Time-resolved fluorescence is generally referred to as the method of detection.

A specific analysis of the sample is carried out by bringing the disks into contact with the incubation buffer in the wells of the plate. After a certain period of incubation, for example 2 hours, the microtiter plate is transferred to an optical measurement unit for the measurement of the assay outcome and the detection of possible floating disks.

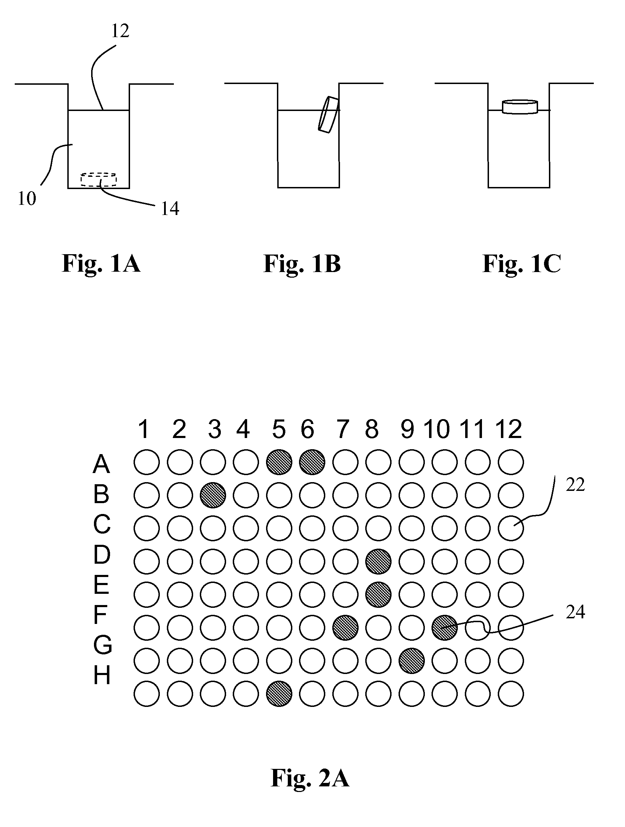

Figs. 1A - 1C illustrate three possible situations in a well of a microtiter plate after incubation. The side wall of a well is denoted with reference numeral 10 (only in Fig. 1A). The well is filled with incubation buffer having a surface 12. In the well, there is a round blood sample disk 14. The situation of Fig. 1A, the disk is submerged in liquid, is normally the situation that one ends in when dispensing incubation buffer into a well containing a punched disk. However, as can be seen in Figs. 1B and 1C, the disk can be submerged only partially, for example, when it sticks to the wall of the well or starts to float for some reason. In the situation of Fig. 1C, there is a risk that the analysis fails due to the fact that the floating disk interferes with the measurement of the assay outcome.

The present method is based on distinguishing between fluorescent properties that are given by a well with a floating disk and fluorescent properties that are given by a well with a non-floating disk. The most common ways of achieving this goal are discussed in preferred embodiments below.
1. Measurement of the well using a time-resolved fluorescence mode in order to detect a unique time-resolved property of a floating sample disk.
   This embodiment is suitable in particular for homogeneous neonatal screening assays (e.g. GALT) where analytes are measured using prompt fluorescence. It has been noted that when analyses are based only on one prompt fluorescence response, negative screening results and results originating from a floating disk can not be reliably distinguished from each other at least at the emission wavelength used (in the case of GALT assay at 460 nm). However, the time-resolved fluorescence responses of the disk and the buffer are significantly different. As an example, the disk may have a time-resolved emission at 615 nm which the incubation buffer or the eluted components do not have.
   In addition, temporal (time-resolved) detection of floating disks can be used even if the actual measurement of the assay outcome is carried out using time-resolved fluorescence, provided that the disk has at least one time-resolved property which is unique with respect to the incubation buffer and the eluted components. As an example, the disk may have a time-resolved emission at 545 nm whereas the analyte is measured using a europium-labelled reagent in the incubation buffer giving an emission at 612-620 nm and no emission at 545 nm.
2. Measurement of the well using prompt fluorescence in order to detect a unique prompt fluorescence property of a floating sample disk.
   This preferred embodiment is suitable in particular when distinguishing time-resolved properties don't exist between the disk and the incubation buffer. Thus, the detection of a floating disk is based on the differences in the spectral properties of the signals originating from a floating disk, incubation buffer and sample.

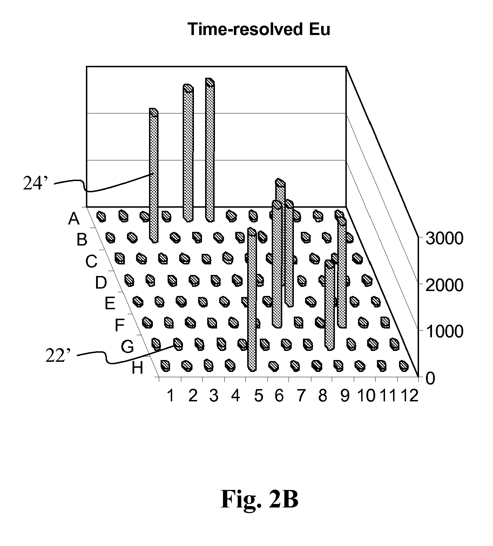

Fig. 2A shows an 8x12 array of wells arranged in a matrix, such as in a microtiter plate (96-well plate). Each well contains a disk punched from blood samples dried on paper-like fibrous cards and incubation buffer doesn't contain any component giving TRF signal. Wells, containing a disk, not interfering measurement and thus giving a reliable measurement outcome, are denoted as 22. There are also wells, shaded and denoted as 24, which contain a floating disk interfering measurement. Fig. 2B shows a 3D graph of a time-resolved fluorescence measurement results from the plate of Fig. 2A at the wavelength of 615 nm, indicating that TRF measurement at 615 nm clearly distinguishes the wells containing a floating disk from the wells having no floating disk.

According to one preferred embodiment, the measurement method used in the detection of floating disks is time-resolved fluorescence, which is adapted for the detection of a known long-lived fluorescence of the sample substrate material. For example, a standard europium fluorescence measurement protocol suits well for this purpose at least in the case of fibrous filter papers used in neonatal screening. If blood samples are measured, it is not necessary that the incubation buffer as such would absorb the excitation or emission light, but eluted haemoglobin will serve as the absorbent. However, it is not excluded that the incubation buffer itself would contain an absorbing component other than haemoglobin. In addition to neonatal screening, time-resolved fluorescence suits other assays taking advantage of similar sample delivery and elution processes.

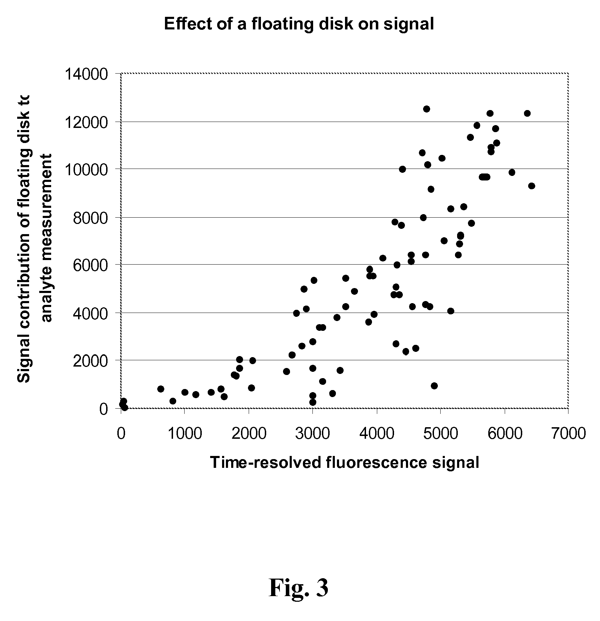

Fig. 3 shows the effect of a floating disk on signal. Time-resolved fluorescence signal measured from a well having a floating disk is shown on the x-axis of the graph. On the y-axis, prompt fluorescence signal of a floating disk is shown. Prompt fluorescence of a floating disk was determined by first measuring prompt fluorescence signal when the disk was floating (correct GALT signal + fluorescence of disk) and then subtracting from that signal the prompt fluorescence signal obtained when the disk was manually submerged to the incubation buffer (correct GALT signal). The graph shows that if a disk is floating in the optical measurement path, the amount of time-resolved fluorescence signal is high. However, also the amount of prompt fluorescence signal is high, which may give a faulty screening result. In summary, the higher the time-resolved signal measured, the higher the probability that the GALT prompt fluorescence measurement is faulty. Low time-resolved counts are obtained for example if the disk is tilted, partly submerged, or in horizontal orientation. In these cases, the probability of erroneous GALT results is decreased too.

The fluorescence measurements are typically performed by using a specific excitation and emission wavelengths selected by means of optical filtering, for example. The excitation and emission wavelengths are chosen based on the fluorescent characteristics of the sample substrate (in the detection of a floating disk) or the analyte measured/label molecules used (in the measurement of analysis outcome). However, the present method can be implemented also by measuring a broad fluorescence excitation and/or emission spectrum and analysing the characteristics of the spectrum for determining if the sample substrate floats or not. Main functional units of an automated measuring apparatus in which the present detection method can be used are described shortly below. A more detailed description of these units, as well as their possible uses in one type of measurement apparatus is contained in the patent application PCT/F12008/050350.

The dispensing unit is used for aspirating reagents from reagent containers and dispensing them to microtiter plate wells. The dispensing unit has functionalities for aspirating reagents and buffers from vials and bottles, diluting reagents in a dilution vessel, dispensing reagents to wells, and optionally handling evaporation caps of vials/bottles where the liquids are contained in. The dispensing unit may also monitor the liquid levels of the reagents in the vials and bottles, and detect presence of evaporation caps and dispensing tips in the reagent storage module. The reagents may include buffers, tracer antibodies for immunoassays, reagents for enzyme assays and/or reagents for possible other assays/chemistries. There may also be provided one or several dilution vessels which can be used for diluting the reagents with buffer. There may also be a flush basin for flushing tips.

The present apparatus has the capability of performing optical measurements for measuring the fluorescent response of samples with at least one measurement mode, but may have the capability of measuring in two or more measurement modes. It is useful if the instrument has the capability of performing optical measurements of samples with at least three measurement modes. The measurements using different modes may be provided in a single measurement unit or separate measurement units. An exemplary instrument has at least the capability to perform prompt (FI) and time-resolved fluorescence (TRF) measurements, and optionally is capable of measuring absorbance (ABS). Additionally, the exemplary instrument could have luminescence mode capability.

An exemplary set of main steps in a homogeneous assay that can be used in neonatal screening is described below:
1. Punching of sample disks from sample cards and placing the disks into the wells of a microtiter plate.
2. Placing the microtiter plate into an input stack of an automated screening apparatus.
3. Dispensing incubation buffer to the wells of the plate.
4. Detection of whether a disk is floating, and if a floating disk is detected, flagging the measurement result in respect of that well as unreliable or as unsuitable for further analysis
5. Measuring optically the amount of the analyte of interest.

It is noteworthy that there may be additional steps, such as storage, incubation, shaking and/or heating/cooling steps in the process, as well as transportation steps where the plate is moved between the units responsible for performing the above steps. Furthermore, order of the steps, especially steps 4 and 5 may be different from the example above.

### Examples

### Lifetime of time-resolved fluorescence response of sample substrate

Filter-paper based sample substrate from Schleicher & Schuell (No. 903™) without blood sample was cut to give a 6 mm disk. The disk was placed in a black 96-well microtiter plate and 200 µL of water was dispensed on the disk in a well and, for comparison, to an empty well. The disk was submerged in water. Then time-resolved fluorescence decay time measurements were performed by exciting at 337 nm using a laser and measuring emission at different wavelengths as a function of elapsed time from excitation. The well containing just water and no disk didn't give any appreciable time-resolved fluorescence at any of the wavelengths tested. On the other hand, the disk in water gave a strong time-resolved emission at all the wavelengths tested and the calculated decay times were following: at 535 nm 933 µs, 545 nm 880 µs, 572 nm 814 µs, 615 nm 680 µs, and at 642 nm 641 µs.

The above results show that sample substrate tested gives, upon excitation at 337 nm, time-resolved fluorescence with a long lifetime and with a broad emission spectrum.

### Time-resolved fluorescence measurements of disks

Two blood spots were eluted in 400 µL water and subsequently 200 µL of eluted blood was dispensed to two wells in a clear 96-well plate. Next a 6 mm disk of Scleicher & Schuell filter paper (No. 903™) without blood sample was placed to one of the wells containing eluted blood so that the disk remained floating. Both wells were measured in Victor® Multilabel reader (PerkinElmer) using time-resolved mode with factory-set protocols. Next the floating disk was submerged to eluted blood and measurements were repeated. Results are in the table below.

| Emission wavelength (nm) | Eluted blood, no disk (counts) | Eluted blood, disk (counts) | Eluted blood, disk floating (counts) |
|---|---|---|---|
| 545 | 254 | 2276 | 167717 |
| 572 | 229 | 611 | 12946 |
| 615 | 94 | 698 | 28245 |
| 642 | 40 | 86 | 3416 |

Results in the above table show that all the tested time-resolved fluorescence emission wavelengths can be used in the detection of floating disks.

Separately a well with water and a well with a disk submerged in water were measured in black 96-well plate using excitation at 340 nm and time-resolved fluorescence emission was measured at 460 nm. There was no blood in the disk. The well with just water gave 90 counts whereas the well with a disk gave 9924 counts. This result indicates that the detection of disks using time-resolved fluorescence can potentially be performed using emission at or close to the blue region of the spectrum.

### Prompt fluorescence measurement of disks

Suitability of prompt fluorescence measurement in the detection of disks was tested by measuring fluorescence (excitation 488 nm, emission 535 nm) of one well with water and the other with disk submerged in water (no blood in the disk, clear 96-well plate). The well with water gave 7627 counts and the well with a disk gave 44071 counts in Victor® Multilabel reader. This result shows that a disk in a well can be detected and suggests that the detection of floating disks in an actual assay should be possible using prompt fluorescence measurement.

### GALT assay

In the Neonatal GALT assay (PerkinElmer), the GALT incubation buffer contains all the necessary components for the detection of GALT activity except enzymes. GALT (galactose-1-phosphate uridyl transferase) itself and other enzymes involved in the enzyme cascade reaction generating NADPH from NADP, namely PGM (phosphoglucomutase), G-6-PD (glucose-6-phosphate dehydrogenase) and 6-PGD (6-phosphogluconate dehydrogenase), come from a sample, a punched blood disk. Components of GALT incubation buffer includes, among other things, NADP which is reduced to NADPH as a result of a reaction cascade started by GALT. GALT incubation buffer with eluted components of a blood disk has no response in a time-resolved fluorescence measurement. On the other hand, the filter paper used to collect blood spots (the substrate) has a long-lived fluorescence which can be measured in the time-resolved mode. If the disk is submerged, the components of the eluted blood, mainly haemoglobin, and also components of the incubation buffer, principally NADP, will prevent most of the time-resolved fluorescence photons from being detected (the so-called quenching effect). On the other hand, a floating disk will provide a time-resolved fluorescence response (e.g. at 615 nm) which is not quenched by the liquid below the floating disk.

The present method was tested using a standard europium measurement protocol and applied to 3617 wells, 263 of which contained a floating blood disk. All wells having a properly submerged disk provided a TRF signal of 50 - 300 counts, whereas all wells having a floating disk provided a TRF signal of 350 - 8000 counts.

The above detailed description, the attached drawings and examples are given for exemplifying purposes only and are not intended to limit the scope of the invention, which is defined in the appended claims.

## Claims

1. A method involving a sample container (10) containing a sample substrate (14) and incubation buffer (12), the sample substrate (14) comprising a blood sample to be eluted to the incubation buffer (14), the method comprises measuring a fluorescent property of the sample container (10),
**characterized in that** the method comprises detection of undesired measurement conditions, such as a floating sample substrate (14) or foreign bodies in the sample container (10), by
- said measuring a fluorescent property of the sample container (10), and
- determining, based on temporal and/or spectral characteristics of the fluorescent property, whether the fluorescent property is characteristic to a sample container (10) comprising a sample substrate (14) and incubation buffer (12) under said undesired measurement conditions or to a sample container (10) suitable for optical measurement of analyte contained in the sample.

2. The method according to claim 1, **characterized by** being adapted for the detection of a floating sample substrate (14) as said undesired measurement condition.

3. The method according to claims 1 or 2, **characterized in that**
- the step of measuring comprises measuring a time-resolved fluorescence signal at least at one wavelength, and
- the step of determining comprises determining if the magnitude of the signal is indicative of an undesired measurement condition.

4. The method according to any of the preceding claims, **characterized in that**
- the step of measuring comprises measuring a prompt fluorescence signal at least at one wavelength, and
- the step of determining comprises determining if the magnitude of the signal is higher or lower than a threshold value indicative of an undesired measurement condition.

5. The method according to any of the preceding claims, **characterized in that** an incubation buffer is used which as such or after elution of components of the sample substrate (14) suppresses excitation and/or emission wavelength of said measurement of the fluorescent response.

6. The method according to any of the preceding claims, **characterized in that** a fibrous sample disk is used as the sample substrate (14).

7. The method according to any of the preceding claims, **characterized by** being performed in connection with neonatal screening using, for example, the GALT or G-6-PD assay.

8. A method for analysing of the content of a component in samples eluted from sample substrates (14) to incubation buffer (12) contained in a plurality of sample containers (10) of a sample plate, comprising
- adding measurement liquid and sample substrates (14) to the plurality of sample containers (10),
- incubating the sample containers (10),
- optically measuring the content of the component in at least some of the sample containers (10),
- **characterized in that** undesired measurement conditions in the sample containers (10) are detected according to the method of any of the preceding claims.

9. The method according to claim 8, **characterized in that** if an undesired measurement condition is detected in a particular sample container (10), the optical measurement is not performed in respect of that sample container (10) or the result of the optical measurement is rejected or flagged unreliable.

10. The method according to claim 8 dependent on claim 2, **characterized in that** if the sample substrate (14) is found to be floating in a particular sample container (10), the sample substrate (14) is automatically submerged before the optical measurement is carried out in respect of that sample container.

11. The method according to any of the preceding claims, **characterized in that** the sample container (10) is selected from a group consisting of tube, well in a microtiter plate, sample cup and cartridge.

12. An apparatus for automated optical analysis of a blood sample in an incubation buffer (12) contained in a sample container (10), the blood sample being provided into the incubation buffer (12) on a sample substrate (14) having an impregnated blood sample, comprising
- a fluorescence measurement unit for measuring the fluorescent response of contents of the sample container (10),
**characterized in that** the apparatus further comprises
- a computing unit adapted to determine, based on the fluorescent response, whether the fluorescent response is characteristic to a sample container (10) comprising a sample substrate (14) and incubation buffer (12) under undesired measurement conditions, such as a floating sample substrate (14) or foreign bodies in the sample container (10), or to a sample container (10) suitable for optical measurement of analyte contained in the sample.

13. The apparatus according to claim 12, **characterized in that** the optical measurement unit is a fluorescence measurement unit capable of measuring prompt or time-resolved fluorescence modes, preferably both said modes.

14. The apparatus according to claim 12 or 13, **characterized in that** the computing unit is adapted to determine whether the sample container (10) contains a floating sample substrate (14) or foreign bodies.

15. The apparatus according to any of claims 12 - 14, **characterized by** further comprising
- a storage unit for storing a plurality of microtiter plates,
- a dispensing unit for dispensing incubation buffer to a plurality of wells of a microtiter plate,
- an incubation unit for incubating the wells containing incubation buffer,
- a manipulator for transporting the microtiter plate between the storage, dispensing, incubation and optical measurement units in an automated fashion.

16. The apparatus according to any of claims 12 - 15, **characterized in that**
- the measurement unit is capable of measuring a time-resolved fluorescence signal at least at one wavelength, and
- the computing unit is adapted to determine if the magnitude of the signal is indicative of an undesired measurement condition.

17. The apparatus according to any of claims 12 - 16, **characterized in that**
- the measurement unit is capable of measuring a prompt fluorescence signal at least at one wavelength, and
- the computing unit is adapted to determine if the magnitude of the signal is higher or lower than a threshold value indicative of an undesired measurement condition.

## Patentansprüche

1. Verfahren betreffend einen Probenbehälter (10), enthaltend ein Probensubstrat (14) und einen Inkubationspuffer (12), wobei das Probensubstrat (14) eine Blutprobe umfasst, die in den Inkubationspuffer (14) eluiert werden soll, wobei das Verfahren das Messen eines fluoreszenten Merkmals des Probenbehälters (10) umfasst,
**dadurch gekennzeichnet, dass** das Verfahren die Erfassung unerwünschter Messbedingungen umfasst, wie z.B. ein schwebendes Probensubstrat (14) oder Fremdkörper im Probenbehälter (10), durch
- Messen eines fluoreszenten Merkmals des Probenbehälters (10) und
- Feststellen, basierend auf temporalen und/oder spektralen Charakteristiken des fluoreszenten Merkmals, ob das fluoreszente Merkmal kennzeichnend für einen Probenbehälter (10), umfassend ein Probensubstrat (14) und einen Inkubationspuffer (12) unter den unerwünschten Messbedingungen oder für einen Probenbehälter (10) ist, der für die optische Messung eines in der Proben enthaltenen Analyts geeignet ist.

2. Verfahren nach Anspruch 1, **dadurch gekennzeichnet, dass** dieses zur Erfassung eines schwebenden Probensubstrats (14) als unerwünschte Messbedingung angepasst ist.

3. Verfahren nach Anspruch 1 oder 2, **dadurch gekennzeichnet, dass**
- der Schritt des Messens das Messen eines zeitaufgelösten Fluoreszenzsignals an wenigstens einer Wellenlänge umfasst und
- der Schritt des Feststellens das Feststellen umfasst, ob die Größenordnung des Signals ein Hinweis auf eine unerwünschte Messbedingung ist.

4. Verfahren nach einem der vorstehenden Ansprüche, **dadurch gekennzeichnet, dass**
- der Schritt des Messens das Messen eines zeitnahen Fluoreszenzsignals an wenigstens einer Wellenlänge umfasst und
- der Schritt des Feststellens das Feststellen umfasst, ob die Größenordnung des Signals höher oder niedriger als ein Grenzwert ist, der ein Hinweis auf eine unerwünschte Messbedingung ist.

5. Verfahren nach einem der vorstehenden Ansprüche, **dadurch gekennzeichnet, dass** ein Inkubationspuffer verwendet wird, der als solcher oder nach der Elution von Komponenten des Probensubstrats (14) die Erregungs- und/oder Emissionswellenlänge der Messung der Fluoreszenzantwort unterdrückt.

6. Verfahren nach einem der vorstehenden Ansprüche, **dadurch gekennzeichnet, dass** eine Faserprobenscheibe als das Probensubstrat (14) eingesetzt wird.

7. Verfahren nach einem der vorstehenden Ansprüche, **dadurch gekennzeichnet, dass** dieses in Zusammenhang mit einer neonatalen Untersuchung unter Verwendung z.B. eines GALT- oder G-6-PD-Tests durchgeführt wird.

8. Verfahren zum Analysieren des Inhalts einer Komponente in Proben, die aus Probensubstraten (14) in Inkubationspuffer (12) eluiert werden, der in einer Vielzahl von Probenbehältern (10) einer Probenplatte enthalten ist, umfassend
- Zugeben einer Messflüssigkeit und Probensubstrate (14) zu der Vielzahl von Probenbehältern (10),
- Inkubieren der Probenbehälter (10),
- optisches Messen des Inhalts der Komponente in wenigstens einigen der Probenbehältern (10),
- **dadurch gekennzeichnet, dass** die unerwünschten Messbedingungen in den Probenbehältern (10) gemäß dem Verfahren nach einem der vorstehenden Ansprüche erfasst werden.

9. Verfahren nach Anspruch 8, **dadurch gekennzeichnet, dass** falls eine unerwünschte Messbedingung in einem bestimmten Probenbehälter (10) erfasst wird, die optische Messung bezüglich dieses Probenbehälters (10) nicht durchgeführt wird oder dass das Ergebnis der optischen Messung aussortiert oder als unzuverlässig markiert wird.

10. Verfahren nach Anspruch 8 als Funktion von Anspruch 2, **dadurch gekennzeichnet, dass** falls sich das Probensubstrat (14) als in einem bestimmten Probenbehälter (10) schwebend herausstellt, das Probensubstrat (14) automatisch untergetaucht wird, bevor die optische Messung bezüglich dieses Probenbehälters durchgeführt wird.

11. Verfahren nach einem der vorstehenden Ansprüche, **dadurch gekennzeichnet, dass** der Probenbehälter (10) ausgewählt ist aus der Gruppe bestehend aus einem Schlauch, einer Vertiefung in einer Mikrotiterplatte, eines Probenbechers und einer Kassette.

12. Apparat zur automatischen optischen Analyse einer Blutprobe in einem Inkubationspuffer (12), der in einem Probenbehälter (10) enthalten ist, wobei die Blutprobe im Inkubationspuffer (12) an einem Probensubstrat (14) mit einer imprägnierten Blutprobe bereitgestellt ist, umfassend
- eine Fluoreszenzmesseinheit zum Messen der Fluoreszenzantwort des Inhalts des Probenbehälters (10),
**dadurch gekennzeichnet, dass** der Apparat ferner Folgendes umfasst:
- eine Rechnereinheit, die basierend auf der Fluoreszenzantwort derart angepasst ist, um festzustellen, ob die Fluoreszenzantwort kennzeichnend für einen Probenbehälter (10), umfassend ein Probensubstrat (14) und einen Inkubationspuffer (12) unter unerwünschten Messbedingungen ist, wie z.B. ein schwebendes Probensubstrat (14) oder Fremdkörpern im Probenbehälter (10) oder für einen Probenbehälter (10), der für die optische Messung des in der Probe enthaltenen Analyts ist.

13. Apparat nach Anspruch 12, **dadurch gekennzeichnet, dass** die optische Messeinheit eine Fluoreszenzmesseinheit ist, die in der Lage ist, zeitnahe oder zeitaufgelöste Fluoreszenzmodi, bevorzugt beide Modi, zu messen.

14. Apparat nach Anspruch 12 oder 13, **dadurch gekennzeichnet, dass** die Rechnereinheit derart angepasst ist, um festzustellen, ob der Probenbehälter (10) ein schwebendes Probensubstrat (14) oder Fremdkörper enthält.

15. Apparat nach einem der Ansprüche 12 - 14, **dadurch gekennzeichnet, dass** dieses ferner Folgendes umfasst:
- eine Aufbewahrungseinheit zum Aufbewahren einer Vielzahl von Mikrotiterplatten,
- eine Abgabeeinheit zur Abgabe des Inkubationspuffers in eine Vielzahl von Vertiefungen einer Mikrotiterplatte,
- eine Inkubationseinheit zum Inkubieren der Vertiefungen, die den Inkubationspuffer enthalten,
- einen Manipulator zum Transportieren der Mikrotiterplatte zwischen den Aufbewahrungs-, Abgabe-, Inkubations- und optischen Messeinheiten auf automatische Weise.

16. Apparat nach einem der Ansprüche 12 - 15, **dadurch gekennzeichnet, dass**
- die Messeinheit in der Lage ist, ein zeitaufgelöstes Fluoreszenzsignal an wenigstens einer Wellenlänge zu messen und
- die Rechnereinheit derart angepasst ist, um festzustellen, ob die Größenordnung des Signals ein Hinweis auf eine unerwünschte Messbedingung ist.

17. Apparat nach einem der Ansprüche 12 - 16, **dadurch gekennzeichnet, dass**
- die Messeinheit in der Lage ist, ein zeitnahes Fluoreszenzsignal an wenigstens einer Wellenlänge zu messen und
- die Rechnereinheit derart angepasst ist, um festzustellen, ob die Größenordnung des Signals höher oder niedriger als ein Grenzwert ist, der ein Hinweis auf eine unerwünschte Messbedingung ist.

## Revendications

1. Procédé impliquant un récipient d'échantillon (10) contenant un substrat d'échantillon (14) et un tampon d'incubation (12), le substrat d'échantillon (14) comprenant un échantillon de sang à éluer dans le tampon d'incubation (14), le procédé comprenant la mesure d'une propriété fluorescente du récipient d'échantillon (10), **caractérisé en ce que** le procédé comprend la détection de conditions de mesure non souhaitées, notamment un substrat d'échantillon flottant (14) ou des corps étrangers dans le récipient d'échantillon (10) par :
- ladite mesure d'une propriété fluorescente du récipient d'échantillon (10) et
- la détermination, sur la base de caractéristiques temporelles et/ou spectrales de la propriété fluorescente, visant à savoir si la propriété fluorescente est caractéristique ou non d'un récipient d'échantillon (10) comprenant un substrat d'échantillon (14) et un tampon d'incubation (12) dans lesdites conditions de mesure non souhaitées ou d'un récipient d'échantillon (10) convenant à la mesure optique d'un analyte contenu dans l'échantillon.

2. Procédé selon la revendication 1, **caractérisé en ce qu'**il est adapté à la détection d'un substrat d'échantillon flottant (14) comme dite condition de mesure non souhaitée.

3. Procédé selon les revendications 1 ou 2, **caractérisé en ce que** :
- l'étape de mesure comprend la mesure d'un signal de fluorescence résolu dans le temps à au moins une longueur d'onde et
- l'étape de détermination comprend la détermination visant à savoir si la grandeur du signal est indicative d'une condition de mesure non souhaitée.

4. Procédé selon l'une quelconque des revendications précédentes, **caractérisé en ce que** :
- l'étape de mesure comprend la mesure d'un signal de fluorescence prompt au moins à une longueur d'onde et
- l'étape de détermination comprend la détermination visant à savoir si la grandeur du signal est supérieure ou inférieure à une valeur de seuil indicative d'une condition de mesure non souhaitée.

5. Procédé selon l'une quelconque des revendications précédentes, **caractérisé en ce qu'**on utilise un tampon d'incubation qui, en tant que tel ou après élution de composants du substrat d'échantillon (14), supprime la longueur d'onde d'excitation et/ou d'émission de ladite mesure de la réponse fluorescente.

6. Procédé selon l'une quelconque des revendications précédentes, **caractérisé en ce qu'**un disque d'échantillon fibreux est utilisé comme substrat d'échantillon (14).

7. Procédé selon l'une quelconque des revendications précédentes, **caractérisé en ce qu'**il est réalisé en liaison avec un criblage néonatal en utilisant, par exemple, le dosage GALT ou G-6-PD.

8. Procédé d'analyse du contenu d'un composant dans des échantillons élués à partir de substrats d'échantillons (14) dans un tampon d'incubation (12) contenus dans une pluralité de récipients d'échantillons (10) d'une plaque d'échantillons, comprenant :
- l'addition d'un liquide de mesure et de substrats d'échantillons (14) à la pluralité de récipients d'échantillons (10),
- l'incubation des récipients d'échantillons (10), et
- la mesure optique du contenu du composant dans au moins certains des récipients d'échantillons (10),
- **caractérisé en ce que** des conditions de mesure non souhaitées dans les récipients d'échantillons (10) sont détectées selon le procédé de l'une quelconque des revendications précédentes.

9. Procédé selon la revendication 8, **caractérisé en ce que**, si une condition de mesure non souhaitée est détectée dans un récipient d'échantillon particulier (10), la mesure optique n'est pas effectuée par rapport à ce récipient d'échantillon (10) ou bien le résultat de la mesure optique est rejeté ou considéré comme non fiable.

10. Procédé selon la revendication 8 dans le mesure où elle dépend de la revendication 2, **caractérisé en ce que**, si le substrat d'échantillon (14) se révèle flottant dans un récipient d'échantillon particulier (10), le substrat d'échantillon (14) est immergé automatiquement avant que la mesure optique ne soit effectuée par rapport à ce récipient d'échantillon.

11. Procédé selon l'une quelconque des revendications précédentes, **caractérisé en ce que** le récipient d'échantillon (10) est choisi dans un groupe constitué d'un tube, d'un puits dans une plaque de microtitrage, dans une coupelle d'échantillon et dans une cartouche d'échantillon.

12. Appareil d'analyse optique automatisée d'un échantillon de sang dans un tampon d'incubation (12) contenu dans un récipient d'échantillon (10), l'échantillon de sang étant fourni dans le tampon d'incubation (12) sur un substrat d'échantillon (14) ayant un échantillon de sang imprégné, comprenant :
- une unité de mesure de fluorescence pour mesurer la réponse fluorescente du contenu du récipient d'échantillon (10),
**caractérisé en ce que** l'appareil comprend en outre :
- une unité de calcul qui est à même de déterminer, sur la base de la réponse fluorescente, si la réponse fluorescente est caractéristique d'un récipient d'échantillon (10) comprenant un substrat d'échantillon (14) et un tampon d'incubation (12) dans des conditions de mesure non souhaitées, notamment un substrat d'échantillon flottant (14) ou des corps étrangers dans le récipient d'échantillon (10), ou d'un récipient d'échantillon (10) convenant à une mesure optique de l'analyte contenu dans l'échantillon.

13. Appareil selon la revendication 12, **caractérisé en ce que** l'unité de mesure optique est une unité de mesure de fluorescence capable de mesurer des modes de fluorescence prompts ou résolus dans le temps, de préférence les deux dits modes.

14. Appareil selon la revendication 12 ou la revendication 13, **caractérisé en ce que** l'unité de calcul est à même de déterminer si le récipient d'échantillon (10) contient un substrat échantillon flottant (14) ou des corps étrangers.

15. Appareil selon l'une quelconque des revendications 12 à 14, **caractérisé en ce qu'**il comprend en outre :
- une unité de stockage pour stocker une pluralité de plaques de microtitrage,
- une unité de distribution pour distribuer du tampon d'incubation à une pluralité de puits d'une plaque de microtitrage,
- une unité d'incubation pour incuber les puits contenant le tampon d'incubation, et
- un manipulateur pour transporter la plaque de microtitrage entre les unités de stockage, de distribution, d'incubation et de mesure optique de manière automatisée.

16. Appareil selon l'une quelconque des revendications 12 à 15, **caractérisé en ce que** :
- l'unité de mesure est à même de mesurer un signal de fluorescence résolu dans le temps au moins à une longueur d'onde et
- l'unité de calcul est à même de déterminer si la grandeur du signal est indicative d'une condition de mesure non souhaitée.

17. Appareil selon l'une quelconque des revendications 12 à 16, **caractérisé en ce que** :
- l'unité de mesure est à même de mesurer un signal de fluorescence prompt au moins à une longueur d'onde et
- l'unité de calcul est à même de déterminer si la grandeur du signal est supérieure ou inférieure à une valeur de seuil indicative d'une condition de mesure non souhaitée.
